# EUROPEAN PATENT APPLICATION

(11) **EP 4 765 588 A1**
(43) Date of publication of application: **24.06.2026**
(21) Application number: 25738508.8
(22) Date of filing: 09.01.2025
(51) Int. Cl.: H02K 3/24, H02K 1/20, H02K 5/20, H02K 9/19

(54) **STATOR CORE FOR COOLING WINDING END, MOTOR, POWERTRAIN, AND ELECTRIC VEHICLE**

(30) Priority: 12.01.2024 CN 202420095315 U
(71) Applicant: Huawei Digital Power Technologies Co., Ltd., Shenzhen, Guangdong 518043 (CN)
(72) Inventor: SUN, Tao, Shenzhen, Guangdong 518043 (CN); WANG, Sixue, Shenzhen, Guangdong 518043 (CN); HOU, Jining, Shenzhen, Guangdong 518043 (CN); FU, Fangyuan, Shenzhen, Guangdong 518043 (CN); HUANGFU, Yuzhao, Shenzhen, Guangdong 518043 (CN); GUO, Qiqi, Shenzhen, Guangdong 518043 (CN); LUO, Dong, Shenzhen, Guangdong 518043 (CN)
(74) Representative: Gill Jennings & Every LLP
(86) International application number: PCT/CN2025/071523
(87) International publication number: WO 2025/148980

(57) **Abstract**

This application provides a stator core for cooling a winding end portion, a motor, a powertrain, and an electric vehicle. The stator core includes a plurality of stator laminations, and the plurality of stator laminations are sequentially and adjacently arranged along an axial direction of the stator core to form at least a part of the stator core. Each stator lamination includes a central hole and a plurality of cooling holes, and all the cooling holes are spaced apart between the central hole and an outer circumferential surface of the stator lamination. The plurality of stator laminations include one first lamination and one second lamination that are adjacently arranged, and each cooling hole of the one first lamination is configured to communicate with one cooling hole of the one second lamination and is configured to cool an end portion of a stator winding, to form a channel for flowing of a cooling working medium. Along at least one of a radial direction or a circumferential direction of the stator core, each cooling hole of the one first lamination is arranged eccentrically relative to the one cooling hole that is of the second lamination and that communicates with the cooling hole of the one first lamination. In the stator core, a cross section of the channel for flowing of the cooling working medium can be reduced, and a flow speed of the cooling working medium is improved.

## Description

### CROSS-REFERENCE TO RELATED APPLICATIONS

This application claims priority to Chinese Patent Application No. 202420095315.8, filed with the China National Intellectual Property Administration on January 12, 2024 and entitled "STATOR CORE FOR COOLING WINDING END PORTION, MOTOR, POWERTRAIN, AND ELECTRIC VEHICLE", which is incorporated herein by reference in its entirety.

### TECHNICAL FIELD

This application relates to the field of motor technologies, and in particular, to a stator core for cooling a winding end portion, a motor, a powertrain, and an electric vehicle.

### BACKGROUND

With development of science and technology, a motor has higher power density and a smaller volume. The higher power density of the motor imposes a higher requirement on heat dissipation of the motor.

When the motor works, a heat loss of a stator core is an important heat source of the motor. Oil-cooled heat dissipation can be performed on a stator of the motor through a heat dissipation channel disposed on the stator. At present, a conventional heat dissipation manner of the stator of the motor is inadequate, and there is room for improvement in cooling effect.

### SUMMARY

This application provides a stator core for cooling a winding end portion, a motor, a powertrain, and an electric vehicle. The stator core enables oil spraying at an end portion of a stator and achieves a high oil spraying speed.

According to a first aspect, this application provides a stator core for cooling a winding end portion. The stator core may be applied to a motor in the field of electric vehicles. The stator core includes a plurality of stator laminations, and the plurality of stator laminations are sequentially and adjacently arranged along an axial direction of the stator core to form at least a part of the stator core. Each stator lamination includes a central hole and a plurality of cooling holes, the plurality of cooling holes are spaced apart along a circumferential direction of the stator lamination, and all the cooling holes are spaced apart between the central hole and an outer circumferential surface of the stator lamination. After the plurality of stator laminations are adjacently arranged along the axial direction of the stator core, the central holes of the plurality of stator laminations communicate with each other to form an accommodation hole for accommodating a rotor. The plurality of stator laminations include one first lamination and one second lamination. Specifically, the one first lamination and the one second lamination are adjacently arranged along the axial direction of the stator core. Each cooling hole of the one first lamination is configured to communicate with one cooling hole of the one second lamination and is configured to cool an end portion of a stator winding, to form a channel for flowing of a cooling working medium. Along at least one of a radial direction or a circumferential direction of the stator core, each cooling hole of the one first lamination is arranged eccentrically relative to the one cooling hole that is of the second lamination and that communicates with the cooling hole of the one first lamination.

In the stator core, the cooling hole of the first lamination and the cooling hole of the second lamination are staggered, to reduce a size of a cross section of the channel for flowing of the cooling working medium. Under a condition that a flow rate of a cooling working medium driven by an oil pump is fixed, the flow rate of the cooling working medium is increased when the cross section of the channel is reduced. When the first lamination is used as a stator lamination at an end portion of the stator core, the first cooling hole and the second cooling hole are staggered, so that the cooling working medium has a high speed when being sprayed, thereby achieving good liquid-cooled heat dissipation effect.

In a possible implementation, along the radial direction of the stator core, a spacing between the cooling hole of the one first lamination and the central hole is less than a spacing between the cooling hole of the one second lamination and the central hole. In this way, one cooling hole of the first lamination is offset along the radial direction of the stator core relative to one cooling hole that is of the second lamination and that communicates with the one cooling hole of the first lamination.

In a possible implementation, one cooling hole of the one first lamination communicates with one cooling hole of the one second lamination, and another cooling hole of the one first lamination communicates with another cooling hole of the one second lamination; and along the circumferential direction of the stator core, a distance between the one cooling hole and the another cooling hole of the one first lamination is unequal to a distance between the one cooling hole of the one second lamination and the another cooling hole of the one first lamination, and a distance between the one cooling hole and the another cooling hole of the one second lamination is unequal to a distance between the one cooling hole of the one first lamination and the another cooling hole of the one second lamination. In this way, one cooling hole of the first lamination is offset along the circumferential direction of the stator core relative to one cooling hole that is of the second lamination and that communicates with the one cooling hole of the first lamination.

In a possible implementation, a hole diameter of the cooling hole of the one first lamination is less than or equal to a hole diameter of the cooling hole of the one second lamination. Reducing the hole diameter of the cooling hole of the first lamination may further increase a flow rate of the cooling working medium flowing from the cooling hole of the second lamination to the cooling hole of the first lamination.

In a possible implementation, a quantity of cooling holes of the one first lamination may be set to be less than a quantity of cooling holes of the one second lamination. When the cooling hole of the one first lamination is used as an axial liquid outlet of the stator core, a quantity of active liquid outlets can be reduced, and a flow rate can be increased.

In a possible implementation, the plurality of stator laminations include a plurality of second laminations and another second lamination, and the plurality of second laminations are arranged between the one second lamination and the another second lamination along the axial direction of the stator core; and along the axial direction of the stator core, the plurality of cooling holes of the one second lamination are respectively configured to communicate with the plurality of cooling holes of an adjacent second lamination, the plurality of cooling holes of the another second lamination are respectively configured to communicate with the plurality of cooling holes of an adjacent second lamination, and the plurality of cooling holes of each of the plurality of second laminations are respectively configured to communicate with the plurality of cooling holes of an adjacent second lamination. Between any two adjacent second laminations, one cooling hole of one second lamination is configured to communicate with a second cooling hole of the other second lamination, to form a channel for flowing of the cooling working medium. Designing a structure and an arrangement manner of the plurality of second laminations may change a flow direction of the cooling working medium.

In a possible implementation, in two cooling holes that are adjacent to each other in a circumferential direction of the second lamination, a spacing between one cooling hole and the central hole is greater than a spacing between the other cooling hole and the central hole. After the stator core includes the plurality of second laminations, and the plurality of second laminations are stacked through rotation along the circumferential direction of the stator core by a specific angle, an inclined flow passage may be formed, and the cooling working medium is directed to a center of the stator core, to facilitate liquid spraying onto an end winding.

Specifically, in any two communicating cooling holes of the second lamination, along the radial direction of the stator core, a spacing between the one cooling hole and the central hole is greater than a spacing between the other cooling hole and the central hole.

In a possible implementation, the plurality of stator laminations include a third lamination, and the third lamination and the another second lamination are adjacently arranged along the axial direction of the stator core; along the radial direction of the stator core, a cooling hole of the third lamination communicates with an outer circumferential surface of the third lamination; and along the axial direction of the stator core, the plurality of cooling holes of the third lamination are respectively configured to communicate with the plurality of cooling holes of the another second lamination, and a distance between the cooling hole of the third lamination and the central hole is less than or equal to a distance between the cooling hole of the second lamination and the central hole. The cooling hole of the third lamination may guide a cooling working medium entering between the housing and the stator core to the second lamination.

In a possible implementation, the plurality of stator laminations include a third lamination and a fourth lamination, the fourth lamination is adjacently arranged with the another second lamination along the axial direction of the stator core, and along the axial direction of the stator core, the third lamination is adjacently arranged on a side that is of the fourth lamination and that faces away from the another second lamination; along the radial direction of the stator core, a cooling hole of the third lamination communicates with an outer circumferential surface of the third lamination; and along the axial direction of the stator core, the plurality of cooling holes of the fourth lamination are respectively configured to communicate with at least one cooling hole of the another second lamination and at least one cooling hole of the third lamination. The cooling hole of the fourth lamination may form, between the second lamination and the third lamination, collection space that can accommodate more cooling working media, and the liquid outlet provides a more abundant oil supply, thereby ensuring an oil pressure and an oil speed of spraying from the liquid outlet, and further reducing an assembly precision requirement.

In a possible implementation, along the circumferential direction of the stator core, a circumferential size of the cooling hole of the fourth lamination is greater than a spacing between two adjacent cooling holes of the second lamination and a spacing between two adjacent cooling holes of the third lamination, so that the cooling holes of the fourth lamination can communicate with all of the plurality of cooling holes of the second lamination and the plurality of cooling holes of the third lamination.

In a possible implementation, each cooling hole of the fourth lamination communicates with an outer circumferential surface of the fourth lamination along the radial direction of the stator core; and at least two adjacent cooling holes in the plurality of cooling holes of the fourth lamination communicate with each other along the circumferential direction of the stator core. An annular channel for flowing of the cooling working medium may be formed between the third lamination and the second lamination.

According to a second aspect, this application provides a motor. The motor includes a housing and any stator core according to the first aspect. The housing is sleeved on an outer circumferential surface of the stator core, the housing includes a liquid inlet, and the liquid inlet is configured to communicate with at least one cooling hole of the second lamination, and the cooling working medium may finally flow to the cooling hole of the second lamination after entering the housing.

According to a third aspect, this application provides a powertrain. The powertrain includes a reducer or a transmission and the motor according to any one of the first aspect and the implementations of the first aspect, and a motor shaft of the motor is drivingly connected to an input shaft of the reducer or an input shaft of the transmission. Because the motor has good heat dissipation performance, heat dissipation performance and power performance of the powertrain can be improved.

According to a fourth aspect, this application provides an electric vehicle. In this application, the electric vehicle includes wheels, a transmission mechanism, and the powertrain according to any one of the second aspect and the implementations of the second aspect. The powertrain drives the wheels through the transmission mechanism. The electric vehicle provided in this application has good heat dissipation performance and good power performance.

For technical effect that can be achieved by the second aspect to the fourth aspect, refer to descriptions of the technical effect that can be achieved by the corresponding design solutions in the first aspect. Details are not described herein again in this application.

### BRIEF DESCRIPTION OF DRAWINGS

FIG. 1 is a diagram of a structure of an electric vehicle according to an embodiment of this application;
FIG. 2 is a diagram of a structure of a powertrain according to an embodiment of this application;
FIG. 3a is a diagram of a structure of a housing of a motor and a stator core according to an embodiment of this application;
FIG. 3b is a diagram of a structure of a housing of a motor and a stator core according to an embodiment of this application;
FIG. 4a is a diagram of a structure of a first lamination and a second lamination of a stator core according to an embodiment of this application;
FIG. 4b is a diagram of a structure of a first lamination and a second lamination of a stator core according to an embodiment of this application;
FIG. 5a is a diagram of a partial structure of a first lamination and a second lamination of a stator core according to an embodiment of this application;
FIG. 5b is a sectional view of a partial structure of a first lamination and a second lamination of a stator core according to an embodiment of this application;
FIG. 6a is a diagram of a partial structure of a first lamination and a second lamination of a stator core according to an embodiment of this application;
FIG. 6b is a sectional view of a partial structure of a first lamination and a second lamination of a stator core according to an embodiment of this application;
FIG. 7 is a diagram of a partial structure of a first lamination and a second lamination of a stator core according to an embodiment of this application;
FIG. 8 is a sectional view of a partial structure of a first lamination and a plurality of second laminations of a stator core according to an embodiment of this application;
FIG. 9 is a diagram of a structure of a second lamination of a stator core according to an embodiment of this application;
FIG. 10a is a sectional view of a partial structure of a plurality of second laminations of a stator core according to an embodiment of this application;
FIG. 10b is a sectional view of a partial structure of a plurality of second laminations of a stator core according to an embodiment of this application;
FIG. 11 is a diagram of a partial structure of a plurality of stacked second laminations of a stator core according to an embodiment of this application;
FIG. 12 is a sectional view of a partial structure of a plurality of stacked second laminations of a stator core according to an embodiment of this application;
FIG. 13a is a diagram of a structure of a stator core according to an embodiment of this application;
FIG. 13b is an exploded view of a stator core according to an embodiment of this application;
FIG. 14a is a diagram of a structure of a second lamination and a fourth lamination of a stator core according to an embodiment of this application;
FIG. 14b is a diagram of a structure of a third lamination and a fourth lamination of a stator core according to an embodiment of this application;
FIG. 15 is a diagram of a partial structure of a stator core according to an embodiment of this application;
FIG. 16 is a diagram of a flow path of a cooling working medium of a stator core according to an embodiment of this application;
FIG. 17 is an exploded view of a stator core according to an embodiment of this application;
FIG. 18a is a diagram of a structure of a second lamination and a fourth lamination of a stator core according to an embodiment of this application; and
FIG. 18b is a diagram of a structure of a third lamination and a fourth lamination of a stator core according to an embodiment of this application.

### Reference numerals:

1000: powertrain; 2000: transmission mechanism; 3000: wheel;
100: motor; 200: reducer;
10: stator core; 101: liquid inlet; 102: liquid outlet; 103: stator tooth; 104: winding groove; 105: accommodation hole; 106: axial groove; 20: stator winding; 30: rotor; 40: motor shaft; 50: housing; 51: liquid inlet pipe; 52: radial groove;
1: stator lamination; 1a: first lamination; 1b: second lamination; 1c: third lamination; 1d: fourth lamination; 11: central hole; 12, 12a, 12a1, 12a2, 12b, 12b1, 12b2, 12c, and 12d: cooling hole; 13: lamination groove.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. As used in the specification and the appended claims of this application, reference to "an embodiment", "some embodiments", or the like described in this specification indicates that one or more embodiments of this application include a specific feature, structure, or characteristic described with reference to embodiments.

A heat loss of a stator core is a main heat source of a motor when the motor is running at a high speed. In the conventional technology, oil-cooled heat dissipation is usually performed on a stator of the motor. Specifically, oil may be supplied to the back of the stator core, and oil is sprayed onto an end winding of the stator winding, to implement heat dissipation on the stator. This heat dissipation manner has poor heat dissipation effect, and cannot meet a high heat dissipation requirement brought by an increase in a power density of the motor. In addition, this heat dissipation manner limits a design of the motor, and reduces space utilization, and adding another auxiliary oil spraying structure also increases production costs.

In view of this, embodiments of this application provide a stator core for cooling a winding end portion, a motor, a powertrain, and an electric vehicle. In the stator core, oil spraying at an end portion of a stator can be implemented, and there is a high oil spraying speed.

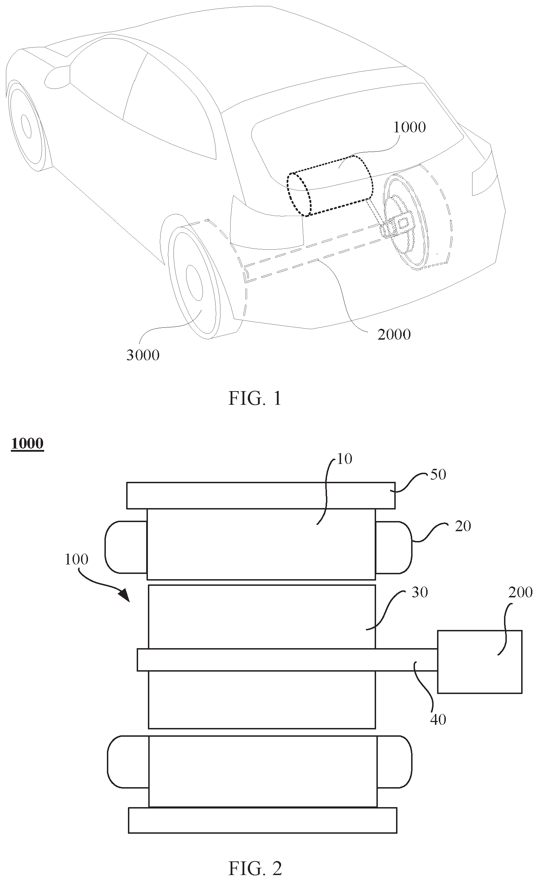

FIG. 1 is a diagram of an electric vehicle according to an embodiment of this application. As shown in FIG. 1, the electric vehicle provided in this embodiment of this application includes a powertrain 1000, a transmission mechanism 2000, and wheels 3000. The powertrain 1000 drives the wheel 3000 through the transmission mechanism 2000. The powertrain 1000 is configured to convert electric energy into mechanical energy. The transmission mechanism 2000 is configured to be drivingly connected to the powertrain 1000 and the wheel 3000.

FIG. 2 is a diagram of a powertrain according to an embodiment of this application. As shown in FIG. 2, the powertrain 1000 provided in this embodiment of this application includes a motor 100 and a reducer 200. The motor 100 is drivingly connected to the reducer 200. The motor 100 is configured to drive the transmission mechanism 2000 of the electric vehicle through the reducer 200. The motor 100 includes a stator core 10, a stator winding 20, a rotor 30, a motor shaft 40, and a housing 50. The rotor 30 is coaxially fastened to the motor shaft 40, and the motor shaft 40 is drivingly connected to the reducer 200. The stator core 10 is sleeved outside the rotor 30, the stator winding 20 is wound around the stator core 10, and the housing 50 is disposed outside the stator core 10. The reducer 200 may alternatively be a transmission. It should be understood that an axial direction of the stator core 10 is also an axial direction of the motor 100, a radial direction of the stator core 10 is also a radial direction of the motor 100, and a circumferential direction of the stator core 10 is also a circumferential direction of the motor 100.

The motor 100 provided in this embodiment of this application is a motor in which liquid is out of a stator to cool a winding. Specifically, a cooling working medium configured for heat dissipation on the stator 10 may also be sprayed onto an end winding of the stator winding 20 for heat dissipation.

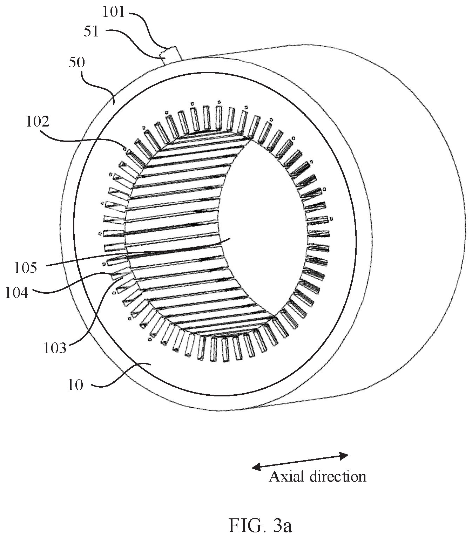

FIG. 3a shows a structure of the stator core 10 and the housing 50 of the motor 100. As shown in FIG. 3a, the housing 50 includes a liquid inlet pipe 51, and the liquid inlet pipe 51 is a hollow pipe. One end of the liquid inlet pipe 51 is fastened to an outer circumferential surface of the housing 50, and a port at one end that is of the liquid inlet pipe 51 and that faces away from the outer circumferential surface of the housing 50 forms a liquid inlet 101. An axial end face of the stator core 10 includes a plurality of liquid outlets 102, and each liquid outlet 102 is configured to spray a cooling working medium to perform heat dissipation on an end portion of the stator winding 20.

For example, the plurality of liquid outlets 102 are spaced apart along the circumferential direction of the motor 100. A quantity and an arrangement rule of the liquid outlets 102 may be adjusted according to an actual cooling requirement and a process condition. The stator core 10 has a channel for flowing of the cooling working medium, and the liquid inlet 101 and the plurality of liquid outlet 102 each communicate with the channel. The cooling working medium may be sprayed onto the channel in the stator core 10 through the liquid inlet 101, and the cooling working medium flows to the plurality of liquid outlets 102 through the channel in the stator core 10 for spraying. When flowing in the stator core 10, the cooling working medium can be used to perform heat dissipation on the stator winding 20 through the stator core 10. After being sprayed from the liquid outlet 102, the cooling working medium can be sprayed onto an end portion of a stator winding 20 located at an end portion of the stator core 10.

Still as shown in FIG. 3a, the stator core 10 includes a stator tooth 103, a winding groove 104, and an accommodation hole 105. The accommodation hole 105 is located at an axis position of the stator core 10 and runs through the stator core 10 along the axial direction of the stator core 10. There are a plurality of winding grooves 104, and the winding grooves 104 are spaced apart along the circumferential direction of the stator core 10. Each winding groove 104 communicates with the accommodation hole 105 along the radial direction of the stator core 10. A stator tooth 103 is formed between any two adjacent winding grooves 104 along the circumferential direction of the stator core 10. The winding groove 104 is configured to accommodate a part of the stator winding 20, and the accommodation hole 105 is configured to accommodate the rotor 30.

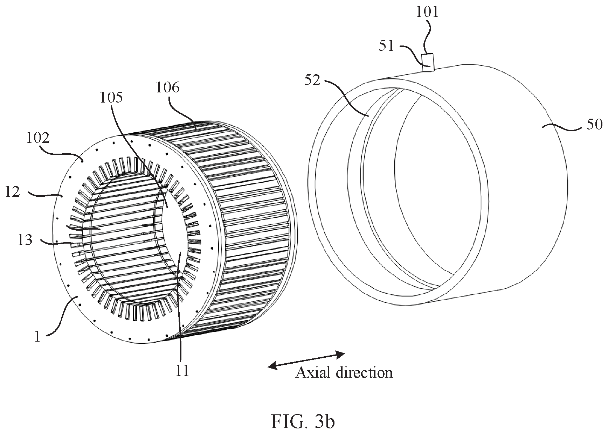

FIG. 3b shows a structure in which the stator core 10 is separated from the housing 50. The stator core 10 includes a plurality of stator laminations 1, and the plurality of stator laminations 1 are arranged along the axial direction of the stator core 10. Each stator lamination 1 includes a central hole 11 and a plurality of cooling holes 12. The central hole 11 is located at a central position of the stator lamination 1, the plurality of cooling holes 12 are spaced apart along the circumferential direction of the stator core 10, and each cooling hole 12 is arranged between the central hole 11 and an outer circumferential surface of the stator lamination 1 along the radial direction of the stator core 10. The central hole 11 and each cooling hole 12 run through the stator lamination 1 along the axial direction of the stator core 10. For example, each stator lamination 1 further includes a plurality of lamination grooves 13, the plurality of lamination grooves 13 are spaced apart along the circumferential direction of the stator core 10 and run through the stator lamination 1 along the axial direction of the stator core 10, each lamination groove 13 is connected to the central hole 11 along the radial direction of the stator core 10, and a groove bottom of the lamination groove 13 faces away from a center of the stator lamination 1. The liquid outlet 102 of the stator core 10 is specifically formed on a stator lamination 1 located at an axial end portion of the stator core 10, and the stator lamination 1 may be considered as an oil spraying structure of the stator core 10. After the plurality of stator laminations 1 are stacked along the axial direction of the stator core 10, the central holes 11 of the plurality of stator laminations 1 can communicate with each other to form the accommodation hole 105 of the stator core 10, the lamination grooves 13 of the plurality of stator laminations 1 communicate with each other to form the winding groove 104, and structures of any two adjacent lamination grooves 13 along the circumferential direction of the stator core 10 can be stacked to form the stator tooth 103 of the stator core 10. An outer circumferential surface of the stator core 10 includes a plurality of axial grooves 106, the axial grooves 106 extend along the axial direction of the stator core 10, and the plurality of axial grooves 106 are spaced apart along the circumferential direction of the stator core 10.

The housing 50 is configured to be circumferentially sealed outside the stator core 10. The housing 50 is cylindrical. An inner wall of the housing 50 includes a radial groove 52. The radial groove 52 includes a groove disposed on the inner wall of the housing 50. The radial groove 52 extends along the circumferential direction of the housing 50. A groove bottom of the radial groove 52 communicates with the liquid inlet 101 through the liquid inlet pipe 51. When the housing 50 is hermetically sleeved on the outer circumferential surface of the stator core 10 that includes the plurality of laminations 1, the radial groove 52 communicates with at least one cooling hole 12 of the stator lamination 1 through the axial groove 106 on the outer circumferential surface of the stator core 10. A correspondence between a quantity of axial grooves 106 and a quantity of cooling holes 12 is not limited, provided that one cooling hole 12 communicates with the radial groove 52 through at least one axial groove 106.

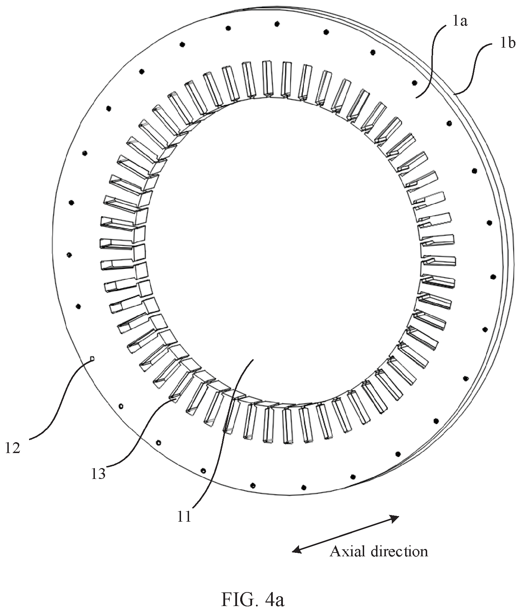

FIG. 4a shows a partial structure of the stator core 10. As shown in FIG. 4a, the plurality of stator laminations 1 of the stator core 10 include a first lamination 1a and a second lamination 1b. Along the axial direction of the stator core 10, the one first lamination 1a and the one second lamination 1b are adjacently arranged, the central hole 11 of the one first lamination 1a communicates with the central hole 11 of the one second lamination 1b, and each cooling hole 12 of the one first lamination 1a is configured to communicate with one cooling hole 12 of the one second lamination 1b and is configured to cool an end portion of the stator winding 20.

As shown in FIG. 4a, the cooling hole 12 may be configured for flowing of the cooling working medium. When the cooling working medium flows through the cooling hole 12, the cooling working medium may be used to perform heat dissipation on the stator lamination 1. Two communicating cooling holes 12 of the first lamination 1a and the second lamination 1b may communicate with each other for flowing of the cooling working medium. For ease of illustration, both the cooling hole 12 of the first lamination 1a and the cooling hole 12 of the second lamination 1b are circular holes, and have a same hole diameter.

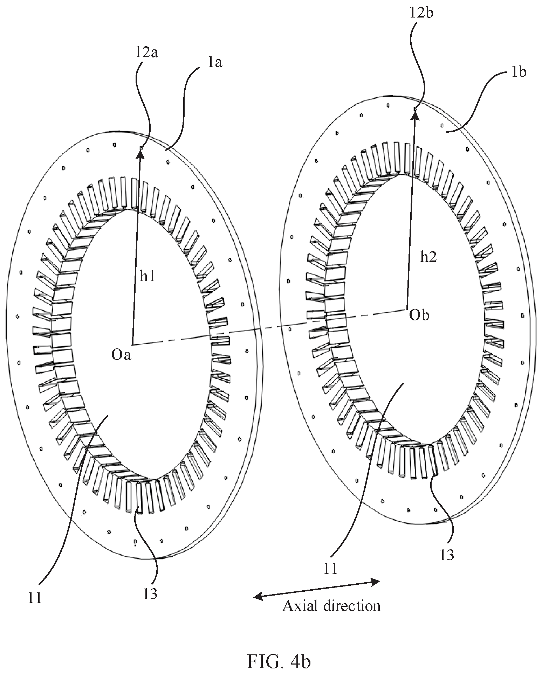

As shown in FIG. 4b, any two communicating cooling holes 12 of the first lamination 1a and the second lamination 1b are used as an example. It is assumed that the cooling hole 12 of the first lamination 1a is a cooling hole 12a, the cooling hole 12 of the second lamination 1b is a cooling hole 12b, and the cooling hole 12a and the cooling hole 12b communicate with each other along the axial direction of the stator core 10. The cooling hole 12a and the cooling hole 12b are eccentrically arranged along the radial direction of the stator core 10, so that a distance from the cooling hole 12a to the central hole 11 is unequal to a distance from the cooling hole 12b to the central hole 11. The central hole 11 of the first lamination 1a and the central hole 11 of the second lamination 1b have equal shapes and sizes, which may also be considered that a spacing h1 between the cooling hole 12a and a center Oa of the first lamination 1a is unequal to a spacing h2 between the cooling hole 12b and a center Ob of the second lamination 1b.

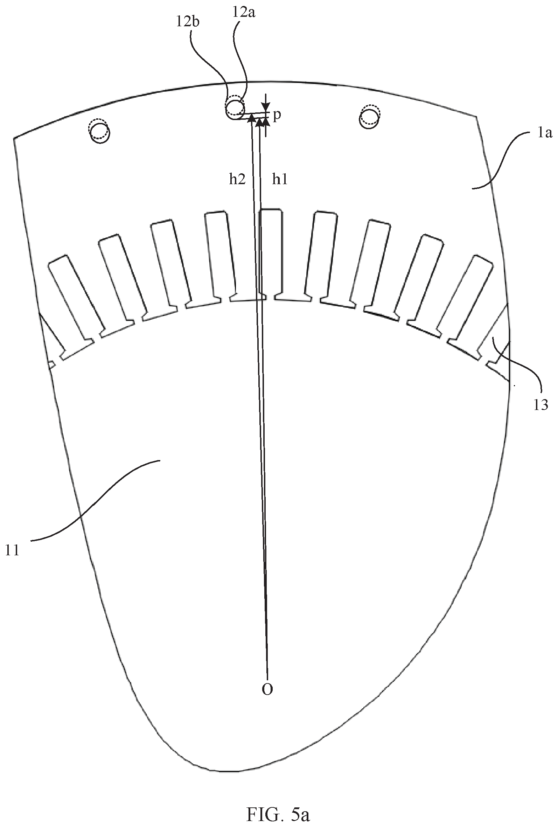

FIG. 5a is a diagram of a structure in which the cooling hole 12a of the first lamination 1a and the cooling hole 12b of the second lamination 1b communicate with each other. For example, through observation along the axial direction of the stator core 10, the first lamination 1a and the second lamination 1b are stacked along the axial direction of the stator core 10, the central hole 11 of the first lamination 1a and the central hole 11 of the second lamination 1b communicate and coincide, the center Oa of the first lamination 1a and the center Ob of the second lamination 1b coincide as a center O, and the plurality of lamination grooves 13 of the first lamination 1a respectively communicate and coincide with the plurality of lamination grooves 13 of the second lamination 1b. In a group of cooling hole 12a and cooling hole 12b that communicate, a spacing h1 between the cooling hole 12a and the center O is less than a spacing h2 between the cooling hole 12b and the center O, and the cooling hole 12a and the cooling hole 12b are eccentrically arranged along the radial direction of the stator core 10. Along the radial direction of the stator core 10, the cooling hole 12a is offset by a distance p toward the center O of the stator core 10 relative to the cooling hole 12b. The distance p is a difference between the spacing h1 and the spacing h2. It should be understood that the cooling hole 12a needs to communicate with the cooling hole 12b, and is offset along the radial direction of the stator core 10. A circular cooling hole 12a and a circular cooling hole 12b are used as an example. A distance by which the cooling hole 12a is offset relative to the cooling hole 12b is not greater than a radial size of any cooling hole 12a, so that projections of the cooling hole 12a and the cooling hole 12b along the axial direction of the stator core 10 partially overlap.

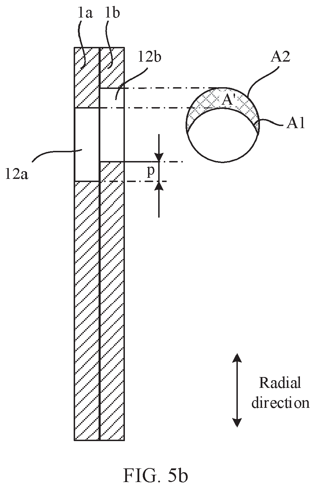

The cooling hole 12a of the first lamination 1a communicate with the cooling hole 12b of the second lamination 1b for flowing of the cooling working medium, and the cooling hole 12a is offset relative to the cooling hole 12b, thereby changing a structure of flow channels of the cooling hole 12a and the cooling hole 12b. Specifically, as shown in FIG. 5b, when the cooling working medium flows from the cooling hole 12b to the cooling hole 12a, for a cross-sectional area that can be occupied by the cooling working medium flowing in the cooling hole 12b, refer to an area A2. After the cooling hole 12a is offset relative to the cooling hole 12b along the radial direction of the stator core 10, when the cooling working medium enters the cooling hole 12a from the cooling hole 12b, a cross-sectional area of a channel for flowing of the cooling working medium suddenly changes to an area shown in an area A1, the area A2 is larger than the area A1, a shadow area A' is a part by which the area A2 is larger than the area A1, and the cooling working medium located in the cooling hole 12b cannot pass through the shadow area A'. Consequently, a cross section of the channel for flowing of the cooling working medium suddenly changes from the area A2 to the area A1, and a flow cross section becomes smaller. At a same power of an oil pump, a flow direction of the cooling working medium is the same, and a rate at which the cooling working medium enters the cooling hole 12a increases. In other words, a flow rate of the cooling working medium may be changed by offsetting the cooling hole 12a relative to the cooling hole 12b.

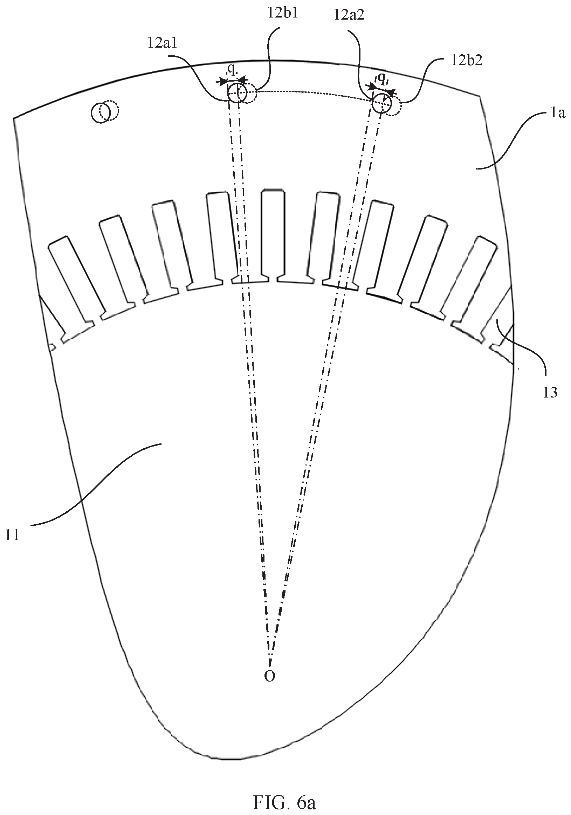

In some embodiments, the cooling hole 12a of the first lamination 1a communicates with the cooling hole 12b of the second lamination 1b, and the cooling hole 12a and the cooling hole 12b are staggered along the circumferential direction of the stator core 10. For example, as shown in FIG. 6a, one first lamination 1a includes two adjacent cooling holes 12a: one cooling hole 12a1 and the other cooling hole 12a2. One second lamination 1b includes two adjacent cooling holes 12b: one cooling hole 12b1 and the other cooling hole 12b2. The one first lamination 1a and the one second lamination 1b are adjacently arranged along the axial direction of the stator core 10. A radial position shown by a dashed line in FIG. 5a is used as an example. The cooling hole 12a1 communicates with the cooling hole 12b1 and is offset by a distance q, and the cooling hole 12a2 communicates with the cooling hole 12b2 and is offset by the distance q. Along the circumferential direction of the stator core 10, a distance between the cooling hole 12a1 and the cooling hole 12a2 is unequal to a distance between the cooling hole 12b1 and the cooling hole 12a2.

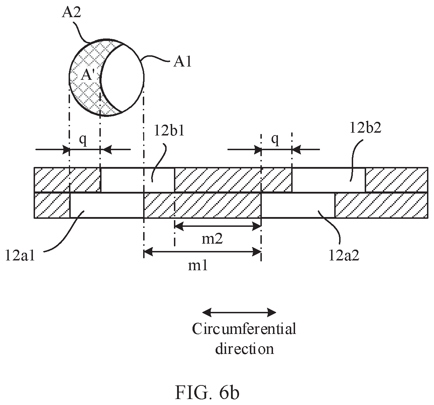

FIG. 6b shows a sectional structure of two circumferentially adjacent cooling holes 12a of the first lamination 1a and two circumferentially adjacent cooling holes 12a of the second lamination 1b. For example, along the circumferential direction of the stator core 10, the cooling hole 12a1 is offset leftward by the distance q relative to the cooling hole 12b1, and the cooling hole 12a2 is offset leftward by the distance q relative to the cooling hole 12b2. A distance between the cooling hole 12a1 and the cooling hole 12a2 is m1, and a distance between the cooling hole 12b1 and the cooling hole 12a2 is m2, and m1>m2.

The cooling hole 12a1 and the cooling hole 12b1 in FIG. 6b are used as an example. When the cooling working medium flows from the cooling hole 12b1 to the cooling hole 12a1, for a cross-sectional area that can be occupied by the cooling working medium flowing in the cooling hole 12b1, refer to the area A2. After the cooling hole 12a1 is offset relative to the cooling hole 12b1 along the circumferential direction of the stator core 10, when the cooling working medium enters the cooling hole 12a1 from the cooling hole 12a1, a cross-sectional area of a channel for flowing of the cooling working medium suddenly changes to an area shown in an area A1, the area A2 is larger than the area A1, a shadow area A' is a part by which the area A2 is larger than the area A1, and the cooling working medium located in the cooling hole 12b1 cannot pass through the shadow area A'. Consequently, a cross section of the channel for flowing of the cooling working medium suddenly changes from the area A2 to the area A1, and a flow cross section becomes smaller. At a same flow rate, a rate at which the cooling working medium enters the cooling hole 12a1 increases. In other words, a flow rate of the cooling working medium may be changed by offsetting the cooling hole 12a1 relative to the cooling hole 12b1.

In some possible embodiments, the cooling hole 12a of the first lamination 1a may be offset relative to the cooling hole 12b of the second lamination 1b along both the circumferential direction and the radial direction of the stator core 10. In this way, when the cooling working medium flows between the cooling hole 12a and the cooling hole 12b, the flow rate changes with the flow cross section.

With reference to the foregoing embodiment, if the first lamination 1a is disposed as the stator lamination 1 at the axial end portion of the stator core 10, the cooling hole 12a of the first lamination 1a is equivalent to the liquid outlet 102 at the end portion of the stator core 10. The cooling working medium flows from the cooling hole 12b of the second lamination 1b to the cooling hole 12a of the first lamination 1a, and offsetting the cooling hole 12a relative to the cooling hole 12b may increase a spraying speed of the cooling working medium. For the stator core 10, in a design of the stator lamination 1, the stator lamination 1 at the axial end portion does not need to be designed with an oil spraying hole with a small hole diameter, to increase an oil spraying rate, and an offset between the cooling hole 12a of the first lamination 1a and the cooling hole 12b of the second lamination 1b can reduce a hole diameter of an oil spraying channel, thereby increasing a flow rate of oil spraying.

It should be understood that when the first lamination 1a is disposed as the stator lamination 1 at the axial end portion of the stator core 10, the cooling hole 12a of the first lamination 1a is equivalent to the liquid outlet 102 at the end portion of the stator core 10. Offsetting the cooling hole 12a of the first lamination 1a relative to the communicating cooling hole 12b of the second lamination 1b toward the center of the stator core 10 may direct the cooling working medium to the stator winding 20 located at the end portion of the stator core 10, to implement liquid-sprayed cooling on the end winding.

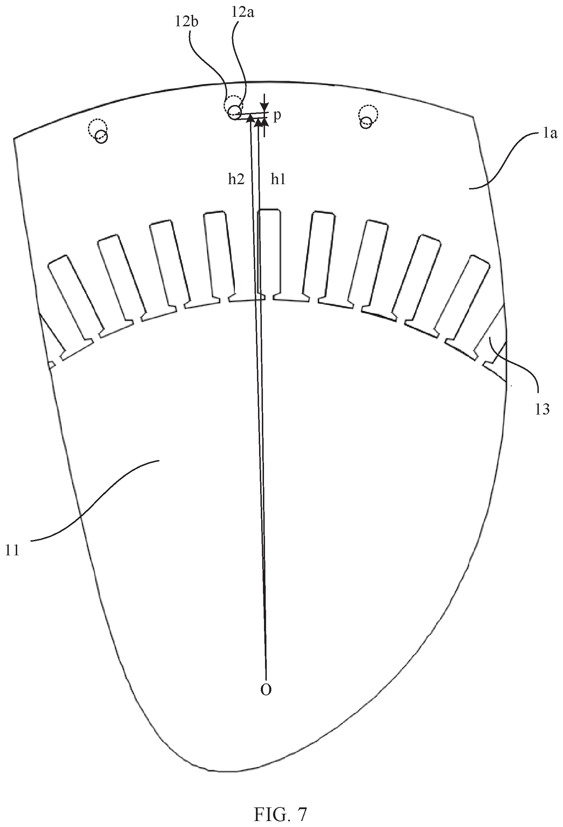

For example, the cooling hole 12a of the first lamination 1a communicates with the cooling hole 12b of the second lamination 1b and is offset along the radial direction of the stator core 10. In some embodiments, as shown in FIG. 7, a hole diameter of the cooling hole 12a of the first lamination 1a is less than or equal to a hole diameter of the cooling hole 12b of the second lamination 1b. A rate at which the cooling working medium is sprayed from the cooling hole 12a is further improved.

It should be understood that, when the first lamination 1a is disposed as the stator lamination 1 at the axial end portion of the stator core 10, there may be one first lamination 1a, and the oil spraying rate can be increased through fitting between one first lamination 1a and one adjacent second lamination 1b. Certainly, there may alternatively be two or three first laminations 1a, but a quantity of first laminations 1a does not need to be too large. There may be a plurality of second laminations 1b. The plurality of second laminations 1b are adjacently arranged along the axial direction of the stator core 10. A plurality of cooling holes 12b of the plurality of second laminations 1b communicate with each other, to form a channel for flowing of the cooling working medium.

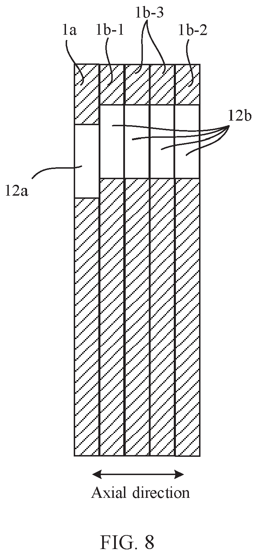

For example, as shown in FIG. 8, the plurality of stator laminations 1 include a plurality of second laminations 1b and another second lamination 1b, and the plurality of second laminations 1b are arranged between the one second lamination 1b and the another second lamination 1b along the axial direction of the stator core 10. For example, as shown in FIG. 8, one first lamination 1a and a plurality of second laminations 1b are sequentially and adjacently arranged along the axial direction of the stator core 10. In the plurality of second laminations 1b, a second lamination 1b-1 is adjacently arranged with the first lamination 1a, and a second lamination 1b-2 is a second lamination 1b that is farthest from the first lamination 1a. For example, two second laminations 1b-3 are arranged between the second lamination 1b-1 and the second lamination 1b-2. The cooling holes 12b of the plurality of second laminations 1b sequentially communicate with each other, and a cooling hole 12b of the second lamination 1b-1 and a cooling hole 12a of the first lamination 1a communicate with each other, and are offset and staggered.

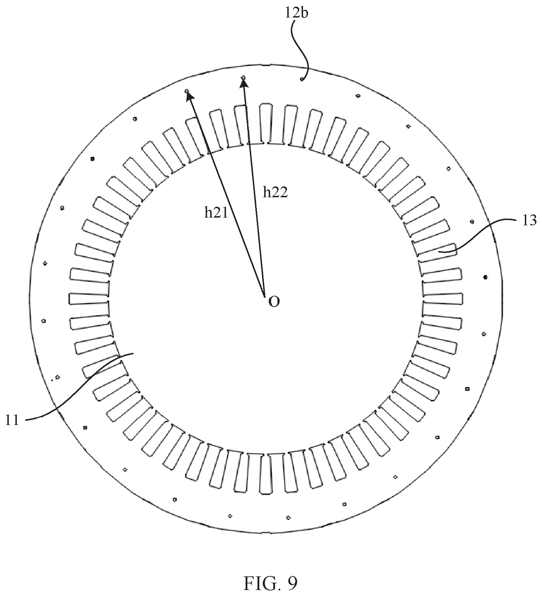

For a second lamination 1b shown in FIG. 9, a distance between the plurality of cooling holes 12b and the center O of the second lamination 1b changes along the circumferential direction of the stator core 10. For example, in two cooling holes 12b that are adjacent along the circumferential direction of the stator core 10, in a clockwise direction, a distance h22 between a current cooling hole 12b and the center O of the second lamination 1b is greater than a distance h21 between a previous cooling hole 12b and the center O of the second lamination 1b. For example, distances between the center O and the plurality of cooling holes 12b of the second lamination 1b gradually increase. For example, the plurality of cooling holes 12b are distributed along an asymptotic line, and a distance between the center O and a cooling hole 12b closest to the center O of the second lamination 1b is used as a radius of a base circle of the asymptotic line.

For each second lamination 1b, in the clockwise direction, the cooling hole 12b closest to the center O of the second lamination 1b is used as a 1^{st} cooling hole 12b, and distances between the center O of the second lamination 1b and a plurality of cooling holes 12b after the 1^{st} cooling hole 12b gradually increase. A distance between a (k+1)^{th} cooling hole 12b and the center O of the second lamination 1b is greater than a distance between a k^{th} cooling hole 12b and the center O of the second lamination 1b.

When a plurality of second laminations 1b shown in FIG. 9 are adjacently arranged along the axial direction of the stator core 10, in two adjacent second laminations 1b, a plurality of cooling holes 12b of a previous second lamination 1b respectively communicate with a plurality of cooling holes 12b of a current second lamination 1b.

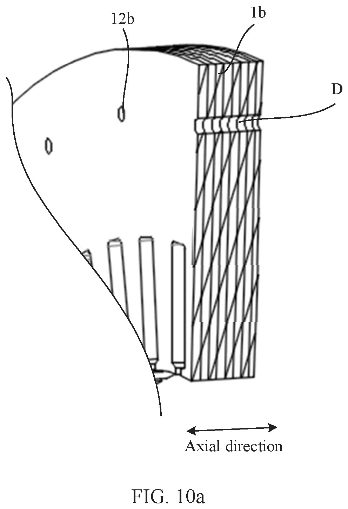

In an arrangement manner, as shown in FIG. 10a, distances between the center of the second lamination 1b and both of two communicating cooling holes 12b are equal. In this structure, cooling holes 12b of each second lamination 1b that have equal distances from the center sequentially communicate to form a cooling channel D for flowing of the cooling working medium, and the cooling channel D is parallel to the axial direction of the stator core 10.

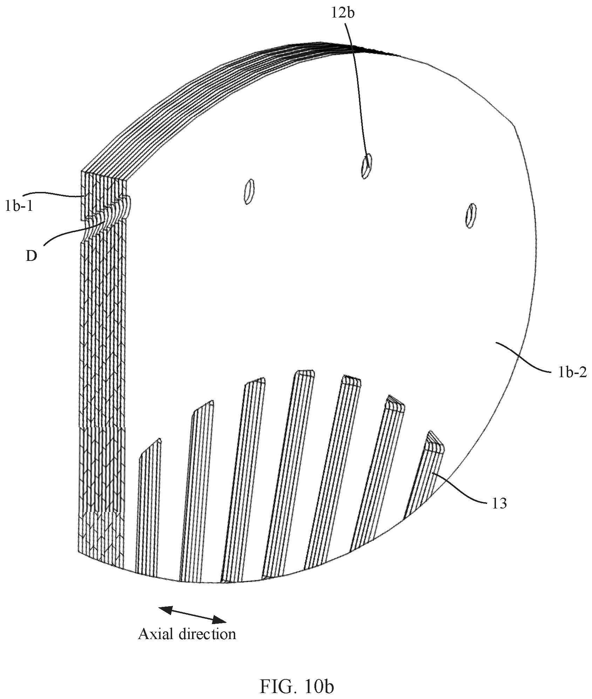

In an arrangement manner, as shown in FIG. 10b, distances between the center of the second lamination 1b and both of two communicating cooling holes 12b are unequal. In the radial direction of the stator core 10, in two communicating cooling holes 12b of two adjacent second laminations 1b, a distance between a cooling hole 12b of one second lamination 1b and the center of the second lamination 1b is greater than a distance between a cooling hole 12b of the other second lamination 1b and the center of the second lamination 1b. A center of a cooling channel including the two cooling holes 12b is offset along the radial direction of the second lamination 1b. In this case, the cooling channel is inclined, and a coolant flow direction is changed. In this structure, there is an included angle between the axial direction of the stator core 10 and the cooling channel D including the communicating cooling holes 12b. When a group of cooling holes 12b of a plurality of second laminations 1b sequentially communicate to form the cooling channel D that runs through all the second laminations 1b, a cooling hole 12b of a second lamination 1b-1 adjacent to the first lamination 1a is closest to the center of the second lamination 1b, and a cooling hole 12b of a second lamination 1b-2 that is farthest from the first lamination 1a is farthest from the center of the second lamination 1b. The inclined cooling channel D is inclined toward an axis of the stator core 10, to direct the cooling working medium to the end winding.

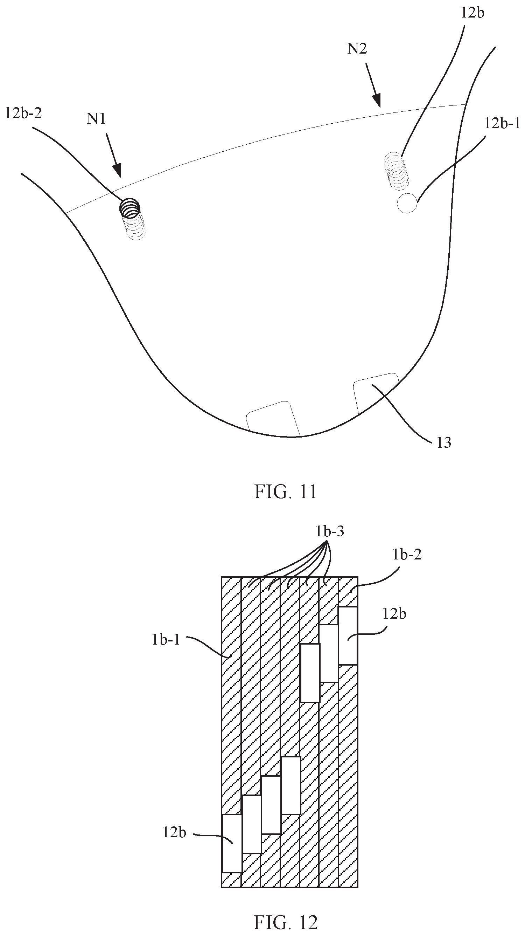

An arrangement manner of the cooling holes 12b of the plurality of second laminations 1b shown in FIG. 10b may be implemented by using a plurality of second laminations 1b shown in FIG. 11. As shown in FIG. 11, in a partial structure of the plurality of second laminations 1b, a cooling hole 12b that is of each second lamination 1b and that is closest to the center O of the second lamination 1b is defined as a cooling hole 12b-1, and a cooling hole 12b that is farthest from the center of the second lamination 1b is defined as a cooling hole 12b-2. Any two adjacent second laminations 1b are deflected relative to each other by a specified angle along a circumferential direction of the second lamination 1b. The specified angle is a central angle between the two cooling holes 12b.

After the plurality of second laminations 1b are sequentially deflected and stacked, the cooling channel D including communicating cooling holes 12b can be inclined along the radial direction of the stator core 10, thereby changing a coolant flow direction. Specifically, the cooling hole 12b closest to the center of the second lamination 1b is used for reference, after the plurality of second lamination 1b are adjacently arranged, a k^{th} cooling hole 12b of one second lamination 1b communicates with a (k+1)^{th} cooling hole 12b of another second lamination 1b, where k is an integer greater than or equal to 1. A direction of the channel including the communicating cooling hole 12b is inclined, and the coolant flow direction is changed.

As shown in FIG. 11, N1 is a position of a cooling hole 12b-2 that is of a 1^{st} second lamination 1b and that is farthest from the center of the second lamination 1b. One cooling hole 12b-2 of the 1 ^{st} second lamination 1b can communicate with a last cooling hole 12b of a last second lamination 1b, so that cooling holes 12b of a plurality of second laminations 1b at the position sequentially communicate to form a cooling channel. Herein, because a k^{th} cooling hole 12b of an (i+1)^{th} second lamination 1b communicates with a (k+1)^{th} cooling hole 12b of an i^{th} second lamination 1b, the cooling channel herein is inclined along the radial direction of the stator core 10, and the cooling working medium may be deflected outward or inward along the radial direction of the stator core 10 during circulation.

As shown in FIG. 11, N2 is a position of a cooling hole 12b-1 that is of a 1^{st} second lamination 1b and that is closest to the center of the second lamination 1b. If the cooling hole 12b-1 of the 1^{st} second lamination 1b is sealed by a 2^{nd} second lamination 1b, the cooling channel that runs through all the second laminations 1b cannot be formed. When the plurality of second laminations 1b are arranged in the axial direction, a cooling hole 12b of any two adjacent second laminations 1b is always blocked, and consequently, the cooling channel is blocked and cannot be connected. It should be understood that, when the cooling channel is blocked by a second lamination 1b, for cooling holes 12b at different angles and positions, the second lamination 1b that blocks the cooling channel may be one of the second laminations 1b, and is not limited to second laminations 1b on two sides. FIG. 12 shows an example of a case in which cooling holes 12b of two second laminations 1b between the 1^{st} second lamination 1b-1 and the last second lamination 1b-2 do not communicate, and an outer cooling channel is blocked.

It should be understood that, when a distance between any two circumferentially adjacent cooling holes 12b of the second lamination 1b changes, the direction of the cooling channel is inclined along the circumferential direction of the stator core 10, so that the cooling working medium is eccentrically deflected along the circumferential direction of the stator core 10. When a communicating manner of the cooling hole 12b is inclined in both the circumferential direction and the radial direction of the stator core 10, rotary spraying can be implemented by spraying a coolant by the stator core 10. Certainly, a spraying direction of the coolant may be irregular. This is not limited in this embodiment of this application. Two second laminations 1b that are adjacent in the axial direction may rotate in the circumferential direction by a specified angle relative to the center of the stator core 10, and the specified angle is an included angle between two adjacent cooling holes 12b of a same second lamination 1b.

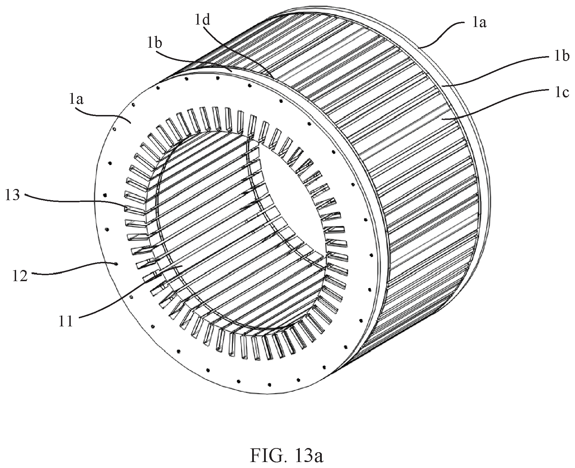

For a stator core 10 shown in FIG. 13a, a plurality of stator laminations 1 include a first lamination 1a, a second lamination 1b, a third lamination 1c, and a fourth lamination 1d. Specifically, the fourth lamination 1d, the second lamination 1b, and a stator core 10 of the third lamination 1c are arranged at each of two axial ends of the third lamination 1c. The second lamination 1b is a combination of a plurality of second laminations 1b, and may be specifically the plurality of second laminations 1b shown in FIG. 8 in the foregoing embodiment. The fourth lamination 1d is arranged between the third laminations 1c and the plurality of second laminations 1b. It may be considered that the first lamination 1a is adjacently arranged with one second lamination 1b-1 in FIG. 8 along the circumferential direction of the stator core 10, the fourth lamination 1d is adjacently arranged with another second lamination 1b-2 in FIG. 8 along the axial direction of the stator core 10, and the third lamination 1c is adjacently arranged, along the axial direction of the stator core 10, on a side that is of the fourth lamination 1d and that faces away from the another second lamination 1b-2. When there is one fourth lamination 1d, the fourth lamination 1d is arranged between the second lamination 1b and the third lamination 1c. Projections of central holes 11 of the first lamination 1a, the second lamination 1b, the third lamination 1c, and the fourth lamination 1d coincide along the axial direction of the stator core 10, and distances from outer circumferential surfaces of the first lamination 1a, the second lamination 1b, the third lamination 1c, and the fourth lamination 1d to the central holes 11 are equal.

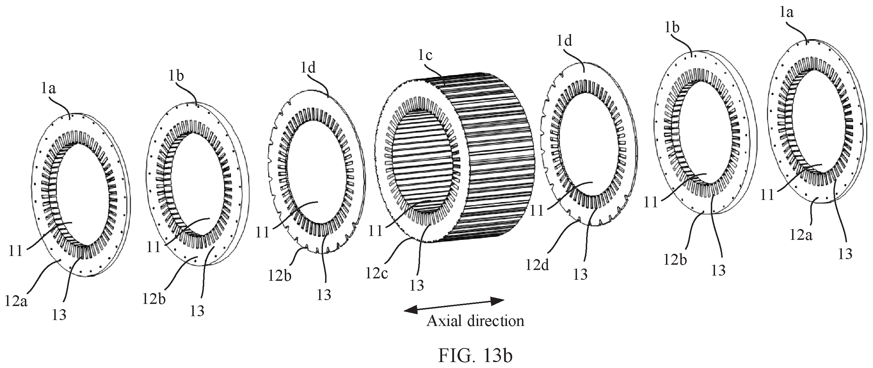

FIG. 13b is an exploded view of the stator core 10. Along the radial direction of the stator core 10, a cooling hole 12c of the third lamination 1c communicates with an outer circumferential surface of the third lamination 1c. It may be considered that the cooling hole 12c of the third lamination 1c is at least a part of the axial groove 106 of the stator core 10. Along the axial direction of the stator core 10, the plurality of cooling holes 12d of the fourth lamination 1d are respectively configured to communicate with at least one cooling hole 12b of the another second lamination 1b-2 and at least one cooling hole 12c of the third lamination 1c. For example, the cooling hole 12d of the fourth lamination 1d communicates with the outer circumferential surface of the fourth lamination 1d along the radial direction of the stator core 10, and each cooling hole 12d of the fourth lamination 1d is configured to communicate with one cooling hole 12b of the second lamination 1b and at least one cooling hole 12c of the third lamination 1c. A quantity of cooling holes 12d of the fourth lamination 1d may be less than a quantity of cooling holes 12 of the second lamination 1b and a quantity of cooling holes 12 of the third lamination 1c.

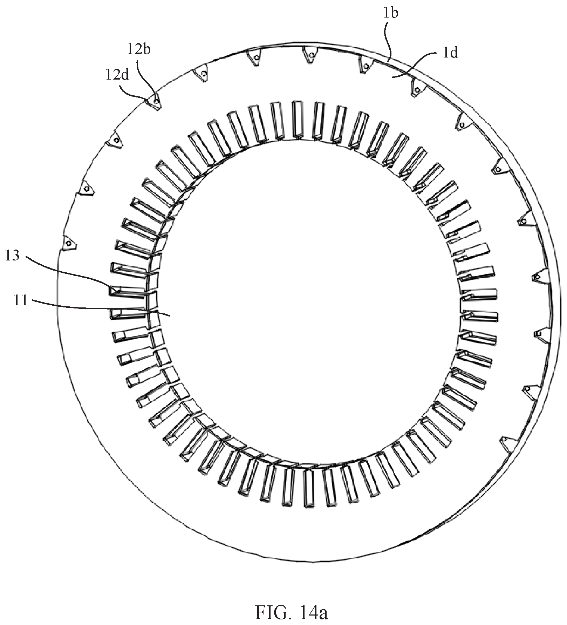

FIG. 14a shows a structure in which the second lamination 1b and the fourth lamination 1d are stacked. Along the axial direction of the stator core 10, an orthographic projection of the cooling hole 12d of the fourth lamination 1d on the second lamination 1b covers the cooling hole 12b of the second lamination 1b. Along the circumferential direction of the stator core 10, a circumferential size of the cooling hole 12d of the fourth lamination 1d is greater than a circumferential size of the cooling hole 12b of the second lamination 1b. Along the radial direction of the stator core 10, a radial size of the cooling hole 12d of the fourth lamination 1d is greater than a radial size of the cooling hole 12b of the second lamination 1b.

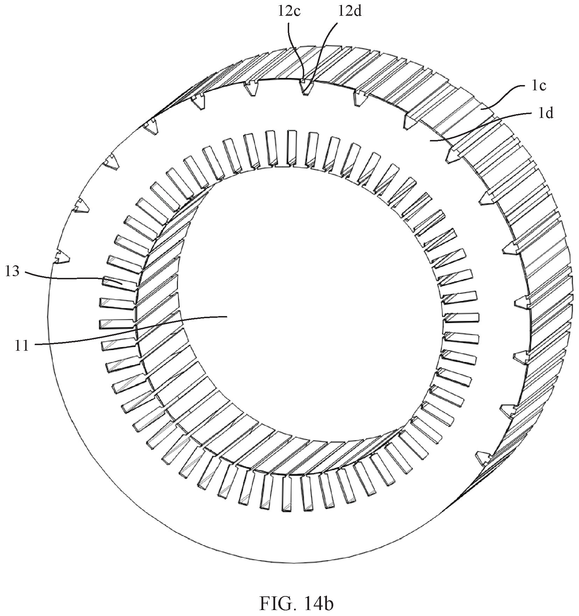

FIG. 14b shows a structure in which the third lamination 1c and the fourth lamination 1d are stacked. Along the axial direction of the stator core 10, an orthographic projection of the cooling hole 12d of the fourth lamination 1d on the third lamination 1c covers at least one cooling hole 12c of the third lamination 1c. Along the circumferential direction of the stator core 10, the circumferential size of the cooling hole 12d of the fourth lamination 1d is greater than a circumferential size of the cooling hole 12c of the third lamination 1c. Along the radial direction of the stator core 10, the radial size of the cooling hole 12d of the fourth lamination 1d is greater than a radial size of the cooling hole 12c of the third lamination 1c.

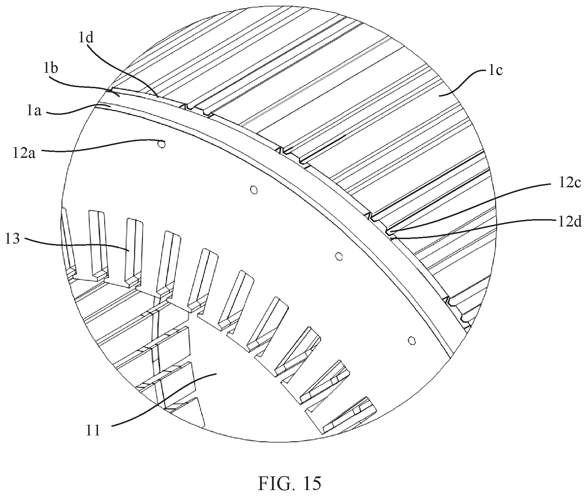

With reference to FIG. 14a and FIG. 14b, FIG. 15 shows a partial structure of the stator core 10. As shown in FIG. 15, along the axial direction of the stator core 10, the first lamination 1a, the second lamination 1b, the fourth lamination 1d, and the third lamination 1c are sequentially and adjacently arranged. The cooling hole 12d of the fourth lamination 1d can communicate with a cooling hole 12b of one second lamination 1b and at least one cooling hole 12c of the third lamination 1c. The circumferential size of the cooling hole 12d of the fourth lamination 1d may be greater than a spacing between two adjacent cooling holes 12b of the second lamination 1b, so that one cooling hole 12d of the fourth lamination 1d can communicate with both of two cooling holes 12b of the second lamination 1b. The circumferential size of the cooling hole 12d of the fourth lamination 1d may be greater than a spacing between two adjacent cooling holes 12c of the third lamination 1c, so that one cooling hole 12d of the fourth lamination 1d can communicate with both of two cooling holes 12c of the third lamination 1c.

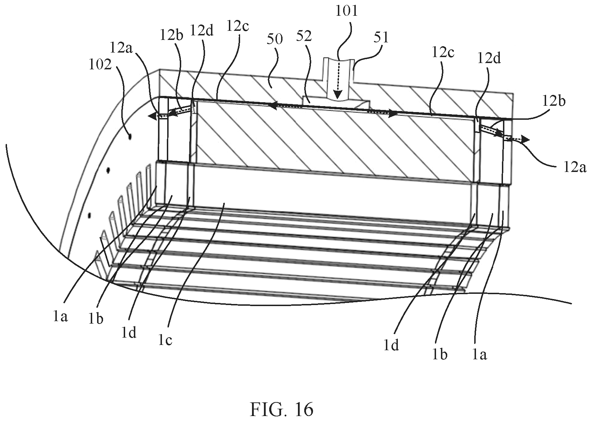

FIG. 16 is a sectional view of a partial structure of the housing 50 and the stator core 10 of the motor 100. As shown in FIG. 16, for example, the cooling working medium is supplied to the liquid inlet 101 of the motor 100. The cooling working medium enters the radial groove 52 of the housing 50 through the liquid inlet pipe 51 of the housing 50, flows in the radial groove 52 along the circumferential direction of the stator core 10, and enters a plurality of cooling holes 12c on an outer circumference surface of the third lamination 1c. A cooling working medium in each cooling hole 12c flows to cooling holes 12d of fourth laminations 1d on two sides of the third lamination 1c along the axial direction of the stator core 10. The cooling working medium in each cooling hole 12d may pass through a cooling channel formed through communication between a plurality of cooling holes 12b of a plurality of second laminations 1b, flow to the cooling hole 12a of the first lamination 1a, and be sprayed and drop at the end portion of the stator winding 20. Because the cooling hole 12a of the first lamination 1a is offset relative to the cooling hole 12b of the adjacent second lamination 1b along at least one of the circumferential direction or the radial direction of the stator core 10, a size of a cross section of the channel for flowing of the cooling working medium is reduced, so that the cooling working medium sprayed from the cooling hole 12a of the first lamination 1a has a high speed.

In some embodiments, for the cooling holes 12d of the fourth lamination 1d, two cooling holes 12d circumferentially communicate, or a plurality of cooling holes 12d circumferentially communicate. At least two adjacent cooling holes 12d in the plurality of cooling holes 12d of the fourth lamination 1d communicate along the circumferential direction of the stator core 10. In the fourth lamination 1d in this structure, the cooling hole 12d of the fourth lamination 1d may communicate with all of the cooling holes 12b of the plurality of second laminations 1b and cooling holes 12c of a plurality of third laminations 1c. When the cooling working medium in the plurality of cooling holes 12 of the third lamination 1c flows to cooling holes 12d of a same fourth lamination 1d, the cooling working medium may flow in the cooling holes 12d along the circumferential direction of the stator core 10, to flow to the plurality of cooling holes 12b of the second lamination 1b.

In the stator core 10 having the fourth lamination 1d, the cooling hole 12d of the fourth lamination 1d may direct a cooling working medium in the third lamination 1c to a cooling hole 12b that is of the second lamination 1b and that is closer to the center of the stator core 10, to help direct the cooling working medium to the end winding. When the cooling hole 12d of the fourth lamination 1d has a large size, the cooling hole 12d of the fourth lamination 1d may form, between the second lamination 1b and the third lamination 1c, collection space that can accommodate more cooling working media. Collection of the cooling working medium herein can provide a more abundant oil supply for the liquid outlet 102, thereby ensuring an oil pressure and an oil speed of spraying from the liquid outlet 102. In addition, the fourth lamination 1d is disposed, so that the cooling hole 12b of the second lamination 1b does not need to strictly correspond to the cooling hole 12c of the third lamination 1c along the axial direction of the stator core 10, thereby reducing an assembly precision requirement.

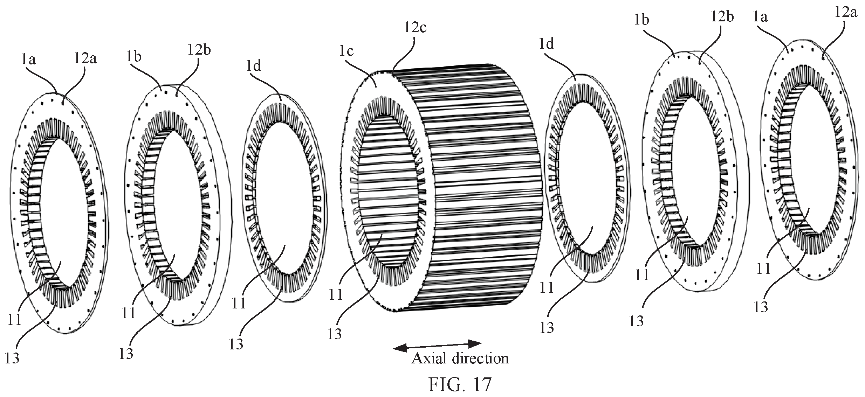

FIG. 17 is an exploded view of the stator core 10. The fourth lamination 1d is of a circular type, and a distance from the outer circumferential surface of the fourth lamination 1d to the center is less than a distance from an outer circumferential surface of the second lamination 1b to the center and a distance from an outer circumferential surface of the third lamination 1c to the center. Projections of the central hole 11 of the second lamination 1b, the central hole 11 of the third lamination 1c, and the central hole 11 of the fourth lamination 1d coincide along the axial direction of the stator core 10. It may also be considered that a distance from the outer circumferential surface of the fourth lamination 1d to the central hole 11 is less than a distance from the outer circumferential surface of the second lamination 1b to the central hole 11 and a distance from the outer circumferential surface of the third lamination 1c to the central hole 11. The fourth lamination 1d in this structure is a structure in which the plurality of cooling holes 12d of the fourth lamination 1d shown in FIG. 13b communicate along the circumferential direction of the stator core 10. In this case, it may be considered that the cooling holes 12d disappear through communication. The fourth lamination 1d may be fastened between the second lamination 1b and the third lamination 1c through bonding.

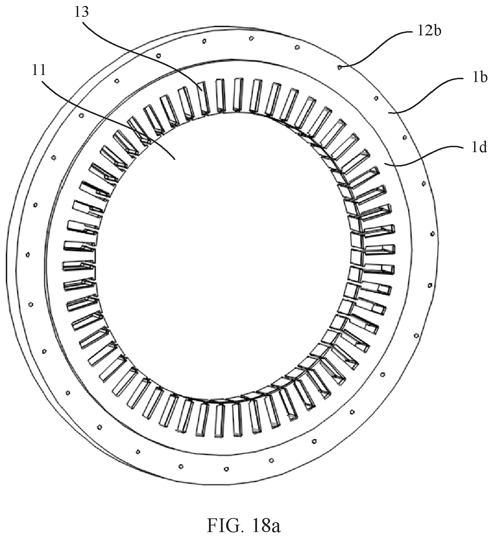

FIG. 18a shows a structure in which the second lamination 1b and the fourth lamination 1d are stacked. Along the axial direction of the stator core 10, an orthographic projection of the outer circumferential surface of the fourth lamination 1d on the second lamination 1b is located between the cooling hole 12b of the second lamination 1b and the groove bottom of the lamination groove 13.

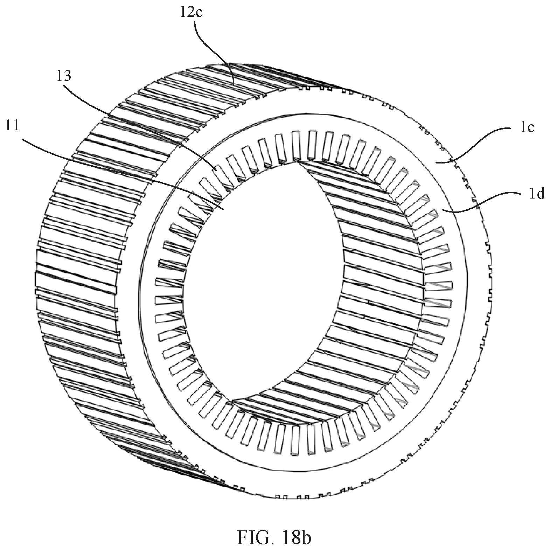

FIG. 18b shows a structure in which the third lamination 1c and the fourth lamination 1d are stacked. Along the axial direction of the stator core 10, an orthographic projection of the outer circumferential surface of the fourth lamination 1d on the third lamination 1c is located between the cooling hole 12c of the third lamination 1c and the groove bottom of the lamination groove 13.

Based on the structures shown in FIG. 18a and FIG. 18b, when the fourth lamination 1d is arranged between the second lamination 1b and the third lamination 1c, an annular channel circumferentially surrounding the stator core 10 may be formed between a surface that is of the third lamination 1c and that faces the second lamination 1b, an outer circumferential surface of the fourth lamination 1d, and a surface that is of the second lamination 1b and that faces the third lamination 1c, the annular channel may be configured for flowing of the cooling working medium along the circumferential direction of the stator core 10. All the cooling holes 12c of the third lamination 1c communicate with the annular channel, and all the cooling holes 12b of the second lamination 1b also communicate with the annular channel. The cooling working medium can flow to the annular channel through the cooling holes 12c of the third lamination 1c, flow along the circumferential direction of the stator core 10, and then be conveyed to each cooling hole 12b of the second lamination 1b.

In some embodiments, when the cooling working medium can flow along the circumferential direction of the stator core 10, and the first lamination 1a is the stator lamination 1 at the axial end portion of the stator core 10 and is configured for oil spraying, a quantity of cooling holes 12a of the first lamination 1a may be reduced. In this way, a part of cooling working media cannot be sprayed from a part of cooling holes 12a of the first lamination 1a, and can only flow to a cooling hole 12a at another position of the first lamination 1a along the circumferential direction of the stator core 10, to further improve a spraying speed.

In some embodiments, a structure of the fourth lamination 1d may be reduced. Specifically, the plurality of stator laminations 1 included in the stator core 10 include the first lamination 1a, the second lamination 1b, and the third lamination 1c. The third lamination 1c and the another second lamination 1b-2 are adjacently arranged along the axial direction of the stator core 10. In other words, the third lamination 1c is arranged on a side that is of the plurality of second lamination 1b and that faces away from the first lamination 1a, and it may be considered that the plurality of second lamination 1b are arranged between the first lamination 1a and the third lamination 1c. Specifically, along the radial direction of the stator core 10, the cooling hole 12 of the third lamination 1c communicates with the outer circumferential surface of the third lamination 1c, and it may be considered that the cooling hole 12 of the third lamination 1c is at least a part of the axial groove 106 of the stator core 10. Along the axial direction of the stator core 10, the plurality of cooling holes 12c of the third lamination 1c are respectively configured to communicate with a plurality of cooling holes 12b of a second lamination 1b adjacent to the third lamination 1c. A distance between the cooling hole 12c of the third lamination 1c and the center of the third lamination 1c is greater than or equal to a distance between the cooling hole 12b of the second lamination 1b and the center of the second lamination 1b. Projections of the central hole 11 of the second lamination 1b and the central hole 11 of the third lamination 1c coincide along the axial direction of the stator core 10. It may also be considered that the distance between the cooling hole 12c of the third lamination 1c and the central hole 11 of the third lamination 1c is greater than or equal to the distance between the cooling hole 12b of the second lamination 1b and the central hole 11 of the second lamination 1b.

In conclusion, the stator core 10 of the motor 100 provided in this embodiment of this application does not need a structure of an oil spraying ring, and the cooling working medium can be sprayed onto the end winding of the axial end portion of the stator core 10 through the cooling channel of the stator core 10. The first lamination 1a is used as the stator lamination 1 at the end portion of the stator core 10, and the cooling hole 12a of the first lamination 1a and the cooling hole 12b of the second lamination 1b are staggered, so that the cooling working medium has a high speed when being sprayed, thereby achieving good liquid-cooled heat dissipation effect. In some embodiments, compared with conventional oil-cooled heat dissipation, in this embodiment of this application, the stator core 10 of the motor 100 has a lower temperature and better heat dissipation effect. The oil spraying ring is removed from the structure, to further reduce costs of the motor 100, and achieve effect of reducing costs and improving efficiency.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A stator core for cooling a winding end portion, wherein the stator core comprises a plurality of stator laminations, each stator lamination comprises a central hole and a plurality of cooling holes that run through the stator lamination along an axial direction of the stator core, the plurality of cooling holes are spaced apart along a circumferential direction of the stator lamination, all the cooling holes are spaced apart between the central hole and an outer circumferential surface of the stator lamination, and the plurality of stator laminations comprise one first lamination and one second lamination;
along the axial direction of the stator core, the one first lamination and the one second lamination are adjacently arranged, the central hole of the one first lamination communicates with the central hole of the one second lamination, and each cooling hole of the one first lamination is configured to communicate with one cooling hole of the one second lamination and is configured to cool an end portion of a stator winding; and
along at least one of a radial direction or a circumferential direction of the stator core, each cooling hole of the one first lamination is arranged eccentrically relative to the one cooling hole that is of the second lamination and that communicates with the cooling hole of the one first lamination.

2. The stator core according to claim 1, wherein along the radial direction of the stator core, a spacing between the cooling hole of the one first lamination and the central hole is less than a spacing between the cooling hole of the one second lamination and the central hole.

3. The stator core according to claim 1 or 2, wherein one cooling hole of the one first lamination communicates with one cooling hole of the one second lamination, and another cooling hole of the one first lamination communicates with another cooling hole of the one second lamination; and
along the circumferential direction of the stator core, a distance between the one cooling hole and the another cooling hole of the one first lamination is unequal to a distance between the one cooling hole of the one second lamination and the another cooling hole of the one first lamination, and a distance between the one cooling hole and the another cooling hole of the one second lamination is unequal to a distance between the one cooling hole of the one first lamination and the another cooling hole of the one second lamination.

4. The stator core according to claim 1, wherein a hole diameter of the cooling hole of the one first lamination is less than or equal to a hole diameter of the cooling hole of the one second lamination.

5. The stator core according to claim 1, wherein a quantity of cooling holes of the one first lamination is less than a quantity of cooling holes of the one second lamination.

6. The stator core according to any one of claims 1 to 5, wherein the plurality of stator laminations comprise a plurality of second laminations and another second lamination, and the plurality of second laminations are arranged between the one second lamination and the another second lamination along the axial direction of the stator core; and
along the axial direction of the stator core, the plurality of cooling holes of the one second lamination are respectively configured to communicate with the plurality of cooling holes of an adjacent second lamination, the plurality of cooling holes of the another second lamination are respectively configured to communicate with the plurality of cooling holes of an adjacent second lamination, and the plurality of cooling holes of each of the plurality of second laminations are respectively configured to communicate with the plurality of cooling holes of an adjacent second lamination.

7. The stator core according to claim 6, wherein in two cooling holes that are adjacent to each other in a circumferential direction of the second lamination, a spacing between one cooling hole and the central hole is greater than a spacing between the other cooling hole and the central hole.

8. The stator core according to claim 7, wherein in any two communicating cooling holes of the second lamination, along the radial direction of the stator core, a spacing between the one cooling hole and the central hole is greater than a spacing between the other cooling hole and the central hole.

9. The stator core according to claim 7 or 8, wherein the plurality of stator laminations comprise a third lamination, and the third lamination and the another second lamination are adjacently arranged along the axial direction of the stator core;
along the radial direction of the stator core, a cooling hole of the third lamination communicates with an outer circumferential surface of the third lamination; and
along the axial direction of the stator core, the plurality of cooling holes of the third lamination are respectively configured to communicate with the plurality of cooling holes of the another second lamination.

10. The stator core according to claim 7 or 8, wherein the plurality of stator laminations comprise a third lamination and a fourth lamination, the fourth lamination is adjacently arranged with the another second lamination along the axial direction of the stator core, and along the axial direction of the stator core, the third lamination is adjacently arranged on a side that is of the fourth lamination and that faces away from the another second lamination;
along the radial direction of the stator core, a cooling hole of the third lamination communicates with an outer circumferential surface of the third lamination; and
along the axial direction of the stator core, the plurality of cooling holes of the fourth lamination are respectively configured to communicate with at least one cooling hole of the another second lamination and at least one cooling hole of the third lamination.

11. The stator core according to claim 10, wherein along the circumferential direction of the stator core, a circumferential size of the cooling hole of the fourth lamination is greater than a spacing between two adjacent cooling holes of the second lamination and a spacing between two adjacent cooling holes of the third lamination.

12. The stator core according to claim 10 or 11, wherein each cooling hole of the fourth lamination communicates with an outer circumferential surface of the fourth lamination along the radial direction of the stator core; and
at least two adjacent cooling holes in the plurality of cooling holes of the fourth lamination communicate with each other along the circumferential direction of the stator core.

13. A motor, wherein the motor comprises a housing and the stator core according to any one of claims 1 to 12; and
the housing is sleeved on an outer circumferential surface of the stator core, the housing comprises a coolant inlet, and the coolant inlet is configured to communicate with at least one cooling hole of the second lamination.

14. A powertrain, comprising a reducer or a transmission and the motor according to claim 13, wherein a motor shaft of the motor is connected to an input shaft of the reducer or an input shaft of the transmission.

15. An electric vehicle, comprising wheels, a transmission mechanism, and the powertrain according to claim 14, wherein the powertrain drives the wheels by using the transmission mechanism.
